# EUROPEAN PATENT APPLICATION

(11) **EP 4 738 529 A1**
(43) Date of publication of application: **06.05.2026**
(21) Application number: 23943108.3
(22) Date of filing: 27.07.2023
(51) Int. Cl.: H01M 10/613

(54) **ENERGY STORAGE SYSTEM AND ENERGY STORAGE POWER STATION**

(30) Priority: 28.06.2023 CN 202321658256 U
(71) Applicant: Contemporary Amperex Technology Co., Limited, Ningde, Fujian 352100 (CN)
(72) Inventor: LI, Xin, Ningde, Fujian 352100 (CN); CHEN, Xiaobo, Ningde, Fujian 352100 (CN); WANG, Xuehui, Ningde, Fujian 352100 (CN)
(74) Representative: Ran, Handong
(86) International application number: PCT/CN2023/109493
(87) International publication number: WO 2025/000620

(57) **Abstract**

Provided in the present application are an energy storage system (1000) and an energy storage power station. The energy storage system (1000) comprises a battery module (100), a converter (200) and a cooling device (300), wherein a cooling unit (310) of the cooling device (300) is connected to a first liquid inlet (111) and a second liquid outlet (212) by means of pipelines. A bypass structure (320) is configured to be in communication with a first liquid outlet (112) and a second liquid inlet (211), and can bypass part of a coolant, which is discharged from the first liquid outlet (112), to the outside of the second liquid inlet (211); therefore, only part of the coolant enters a second cooling structure (210) from a first cooling structure (110), such that only using one cooling device (300) can meet different flow requirements of both the first cooling structure (110) and the second cooling structure (210), thereby effectively reducing the cost of the energy storage system (1000).

## Description

This application claims priority to Chinese Patent Application No. 202321658256.2, filed on June 28, 2023 and entitled "ENERGY STORAGE SYSTEM AND ENERGY STORAGE POWER STATION," which is incorporated herein by reference in its entirety.

### TECHNICAL FIELD

This application relates to the technical field of cooling for energy storage systems, and in particular, provides an energy storage system and an energy storage power station.

### BACKGROUND ART

An energy storage system mainly includes devices such as a battery module and a converter. The devices such as the battery module and the converter generate heat during operation, requiring a cooling system to dissipate the heat.

In the related art, due to the different flow rate and pressure requirements of the cooling liquid for a battery module and a converter in an energy storage power station, two separate cooling systems are needed to meet different flow rate and pressure requirements of the cooling liquid, resulting in high development and manufacturing costs for energy storage systems.

### SUMMARY OF THE APPLICATION

The purpose of the embodiments of this application is to provide an energy storage system and an energy storage power station, aiming to address the issue in the related art that a battery module and a converter of an energy storage system require two cooling systems due to different cooling liquid flow requirements, leading to high costs.

The technical solution adopted by the embodiments of this application is as follows:

In a first aspect, an embodiment of this application provides an energy storage system, including a battery module, a converter, and a cooling device. The battery module includes a first cooling structure, and the first cooling structure has a first liquid inlet and a first liquid outlet. The converter includes a second cooling structure, and the second cooling structure has a second liquid inlet and a second liquid outlet. The cooling device includes a cooling unit and a bypass structure. A liquid outlet end of the cooling unit is connected to the first liquid inlet through a pipeline, and a liquid inlet end of the cooling unit is connected to the second liquid outlet through a pipeline. The bypass structure is configured to communicate the first liquid outlet with the second liquid inlet, and the bypass structure is further configured to bypass a portion of a cooling liquid discharged from the first liquid outlet to outside the second liquid inlet.

The beneficial effects of the embodiments of this application are as follows: In the energy storage system provided by the embodiments of this application, the cooling unit can introduce the cooling liquid to make it sequentially flow through the first cooling structure and the second cooling structure to respectively dissipate heat from the battery module and the converter. After the cooling liquid is discharged from the first liquid outlet of the first cooling structure, a portion of the cooling liquid can be bypassed by the bypass structure to outside the second liquid inlet. Therefore, only a portion of the cooling liquid discharged from the first cooling structure can enter the second cooling structure through the second liquid inlet, meaning that the flow rate of the cooling liquid passing through the second cooling structure is less than the flow rate of the cooling liquid passing through the first cooling structure. The different flow rate requirements of the first cooling structure and the second cooling structure can both be met, allowing only a single cooling device to supply the cooling liquid to the first cooling structure of the battery module and the second cooling structure of the converter for the cooling purpose. Thus, there is no need to use two cooling devices to individually supply the cooling liquid to the first cooling structure of the battery module and the second cooling structure of the converter, thereby effectively reducing the cost of the energy storage system.

In some embodiments, the bypass structure has a bypass end, and the bypass end is connected to the liquid inlet end of the cooling unit.

By adopting the above technical solution, the bypass end of the bypass structure can bypass a portion of the cooling liquid discharged from the first liquid outlet of the first cooling structure to the liquid inlet end of the cooling unit, so that this portion of the cooling liquid flows directly from the first cooling structure back to the cooling unit for cooling and circulation.

In some embodiments, the bypass structure is a three-way valve, and the three-way valve includes a first valve port, a second valve port, and a third valve port. The first valve port is connected to the first liquid outlet, the second valve port is connected to the second liquid inlet, the third valve port is the bypass end, and the third valve port is connected to the liquid inlet end of the cooling unit.

By adopting the above technical solution, the bypass structure is a three-way valve, with the first liquid outlet connected to the first valve port, allowing the first liquid outlet to introduce the cooling liquid flowing through the first cooling structure into the three-way valve. The second valve port is connected to the second liquid inlet, and the third valve port is connected to the liquid inlet end of the cooling unit. The second valve port can introduce a portion of the cooling liquid entering the three-way valve into the second liquid inlet and through the second cooling structure, while the third valve port can directly introduce another portion of the cooling liquid entering the three-way valve into the cooling unit for cooling and circulation.

In some embodiments, the cooling device further includes a hydraulic adjustment mechanism, and the hydraulic adjustment mechanism is configured to be capable of adjusting a hydraulic pressure difference between the cooling liquid in the first cooling structure and the cooling liquid in the second cooling structure.

By adopting the above technical solution, the hydraulic adjustment mechanism is configured to adjust the hydraulic pressure difference between the cooling liquid in the first cooling structure and the cooling liquid in the second cooling structure to meet the different hydraulic pressure requirements of the battery module and the converter for the cooling liquid.

In some embodiments, the hydraulic adjustment mechanism includes a spacer block. In the direction of gravity, when the spacer block is configured to be disposed at a bottom of the first cooling structure, a height of the first cooling structure is greater than a height of the second cooling structure; or in the direction of gravity, when the spacer block is configured to be disposed at a bottom of the second cooling structure, a height of the second cooling structure is greater than a height of the first cooling structure.

By adopting the above technical solution, the spacer block is configured to elevate either the first cooling structure or the second cooling structure, creating a height difference between the first cooling structure and the second cooling structure in the direction of gravity. It can be understood that, in the direction of gravity, a higher height means a lower hydraulic pressure of the cooling liquid. Therefore, by adjusting the height difference between the first cooling structure and the second cooling structure in the direction of gravity, the hydraulic pressure difference between the cooling liquid in the first cooling structure and the cooling liquid in the second cooling structure can be adjusted to meet the different hydraulic pressure requirements of the battery module and the converter for the cooling liquid.

In some embodiments, the spacer block is insulative.

By adopting the above technical solution, since the spacer block is insulative, when the spacer block is placed on the ground, the insulation level of the battery module or the converter relative to the ground can be improved.

In some embodiments, the hydraulic adjustment mechanism includes a pressure reduction structure, and the pressure reduction structure is disposed between the second liquid inlet and the first liquid outlet.

By adopting the above technical solution, the pressure reduction structure is disposed between the second liquid inlet and the first liquid outlet. When the cooling liquid is introduced into the second liquid inlet, the hydraulic pressure is first reduced by the pressure reduction structure, so that the hydraulic pressure of the cooling liquid introduced into the second liquid inlet and flowing through the second cooling structure is lower than the hydraulic pressure of the cooling liquid flowing through the first cooling structure, thereby meeting the different hydraulic pressure requirements of the battery module and the converter for the cooling liquid.

In some embodiments, the hydraulic adjustment mechanism includes a pressure boosting structure, and the pressure boosting structure is disposed between the liquid outlet end of the cooling unit and the first liquid inlet.

By adopting the above technical solution, the cooling liquid is pressurized and then introduced into the first cooling structure, and the cooling liquid discharged from the first cooling structure is depressurized before being introduced into the second cooling structure, thereby meeting the different hydraulic pressure requirements of the battery module and the converter for the cooling liquid.

In some embodiments, the hydraulic adjustment mechanism includes a pressure boosting structure, and the pressure boosting structure is disposed between the second liquid inlet and the first liquid outlet.

By adopting the above technical solution, the pressure boosting structure is disposed between the second liquid inlet and the first liquid outlet. When the cooling liquid is introduced into the second liquid inlet, the hydraulic pressure is first increased by the pressure boosting structure, so that the hydraulic pressure of the cooling liquid introduced into the second liquid inlet and flowing through the second cooling structure is higher than the hydraulic pressure of the cooling liquid flowing through the first cooling structure, thereby meeting the different hydraulic pressure requirements of the battery module and the converter for the cooling liquid.

In some embodiments, the hydraulic adjustment mechanism includes a pressure reduction structure, and the pressure reduction structure is disposed between the liquid outlet end of the cooling unit and the first liquid inlet.

By adopting the above technical solution, the cooling liquid is depressurized and then introduced into the first cooling structure, and the cooling liquid discharged from the first cooling structure is pressurized before being introduced into the second cooling structure, thereby meeting the different hydraulic pressure requirements of the battery module and the converter for the cooling liquid.

In a second aspect, an embodiment of this application further provides an energy storage power station, and the energy storage power station includes at least the energy storage system as described above.

The beneficial effects of the embodiments of this application are as follows: The energy storage power station provided by the embodiments of this application includes the foregoing energy storage system. Since the energy storage system can use only a single cooling device to supply the cooling liquid to the first cooling structure of the battery module and the second cooling structure of the converter to achieve the cooling purpose, the cost of the energy storage system is effectively reduced, and thus the cost of the energy storage power station can also be reduced.

### DESCRIPTION OF DRAWINGS

To more clearly illustrate the technical solutions in the embodiments of this application, the drawings required for use in the embodiments or the related art are briefly described below. It is apparent that the drawings described below are only some embodiments of this application, and those of ordinary skill in the art can obtain other drawings based on these drawings without creative effort.
FIG. 1 is a schematic structural diagram of an energy storage system provided by an embodiment of this application;
FIG. 2 is a schematic structural diagram of an energy storage system provided by an embodiment of this application;
FIG. 3 is a schematic structural diagram of an energy storage system provided by an embodiment of this application;
FIG. 4 is a schematic structural diagram of an energy storage system provided by an embodiment of this application;
FIG. 5 is a schematic structural diagram of an energy storage system provided by an embodiment of this application; and
FIG. 6 is a schematic structural diagram of an energy storage system including multiple energy storage subsystems provided by an embodiment of this application.

The reference numerals in the drawings are:
1000. energy storage system;
100. battery module; 110. first cooling structure; 111. first liquid inlet; 112. first liquid outlet;
200. converter; 210. second cooling structure; 211. second liquid inlet; 212. second liquid outlet;
300. cooling device; 310. cooling unit; 320. bypass structure; 321. bypass end;
410. spacer block; 420. pressure reduction structure; 430. pressure boosting structure; and
G. direction of gravity.

### DETAILED DESCRIPTION

The embodiments of this application are described in detail below, with examples of the embodiments illustrated in the drawings, wherein the same or similar reference numerals denote the same or similar elements or elements having the same or similar functions throughout. The embodiments described below with reference to the drawings are exemplary and intended to explain this application, and should not be construed as limiting this application.

Unless otherwise defined, all technical and scientific terms used herein have the same meaning as commonly understood by those skilled in the technical field of this application. The terms used herein are only for the purpose of describing specific embodiments and are not intended to limit this application. The terms "including" and "having" and any variations thereof in the description, claims, and the above description of the drawings of this application are intended to cover non-exclusive inclusion.

In the description of the embodiments of this application, the terms indicating orientation or positional relationships such as "length," "width," "thickness," "inner," "outer," "upper," "lower," "left," and "right," are based on the orientation or positional relationships shown in the drawings, and are only for convenience in describing this application and simplifying the description, rather than indicating or implying that the referred device or element must have a specific orientation, be constructed, and operate in a specific orientation, and thus should not be construed as limiting this application.

The terms "first," "second," and the like are used only for distinguishing descriptions and should not be understood as indicating or implying relative importance or implicitly indicating the number of technical features indicated. For example, the first guide member and the second guide member are only used to distinguish different guide members and do not limit their order. The first guide member may also be named the second guide member, and the second guide member may also be named the first guide member, without departing from the scope of the described embodiments. Moreover, the terms "first," "second," and the like do not limit the indicated features to be necessarily different.

In the description of the embodiments of this application, unless otherwise expressly specified and limited, the terms "connected," "connection," and the like should be understood in a broad sense. For example, it may be a fixed connection, a detachable connection, or an integral connection. It may be a mechanical connection or an electrical connection. It may be a direct connection or an indirect connection through an intermediate medium, or it may be the internal communication or interaction between two elements. Those of ordinary skill in the art can understand the specific meanings of the above terms in this application based on specific circumstances. The meaning of "multiple" is at least two, namely, two or more.

In this application, "and/or" is merely an association describing the relationship between associated objects, indicating that three relationships may exist. For example, A and/or B may represent: A alone, A and B simultaneously, and B alone. Additionally, the character "/" in this document generally indicates that the associated objects before and after it are in an "or" relationship.

It should be noted that in this application, words such as "in some embodiments," "exemplarily," "for example," and the like are used to indicate examples, illustrations, or descriptions. Any embodiment or design described in this application as "in some embodiments," "exemplarily," or "for example" should not be construed as being preferred or advantageous over other embodiments or designs. Rather, the use of words such as "in some embodiments," "exemplarily," or "for example" is intended to present related concepts in a specific manner, meaning that the specific features, structures, or characteristics described in connection with the embodiments may be included in at least one embodiment of this application. The appearance of such terms in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

To make the objectives, technical solutions, and advantages of this application clearer, the application is further described in detail below in conjunction with the drawings and embodiments.

Energy storage is an important equipment foundation and key supporting technology for building a new power system and promoting the green and low-carbon transformation of energy. With the increasing proportion of renewable energy generation and installed capacity in China, the "renewable energy + energy storage" model will play an increasingly important role in the regulation and assurance of the power system.

An energy storage system includes devices such as a battery module and a converter. The devices such as the battery module and converter generate heat during operation, thus requiring a cooling system for heat dissipation. The battery module and converter each have a liquid cooling structure for a cooling liquid to pass through, such as a water-cooling plate. The cooling liquid of the cooling system flows the liquid cooling structure of the battery module and the liquid cooling structure of the converter, to achieve the purpose of cooling the battery module and converter.

However, a battery module and a converter in an energy storage system have substantially the same power, but the conversion efficiency of the converter is generally slightly higher than that of the battery module, so the heat generation power of the converter is less than that of the battery module. Consequently, due to different heat generation powers, the heat dissipation requirements of the battery module and the converter differ. The pipe diameters of the liquid cooling channels in the liquid cooling structures of the battery module and the converter are also different. Therefore, the battery module and the converter have different flow rate requirements for the cooling liquid, and the cooling liquid demand of the battery module and the converter may differ by about ten times. Simply communicating the cooling structures of the battery module with the converter will result in at least one of them failing to meet the cooling requirements.

In the related art, to meet both the flow rate and pressure requirements of the cooling liquid for the battery module and the converter, two cooling systems with different parameters are generally used to act on the battery module and the converter separately. Using two cooling systems to act on the battery module and the converter significantly impacts the development and manufacturing costs of the energy storage system, leading to an increase in the cost of the energy storage system.

Based on the above considerations, to address the issue of high costs caused by the need for two cooling systems resulting from different cooling liquid flow rate requirements of a battery module and a converter in an energy storage system, an energy storage system is designed. By providing a bypass structure between a first liquid outlet of a first cooling structure and a second liquid inlet of a second cooling structure, the bypass structure can bypass a portion of a cooling liquid discharged from the first liquid outlet to outside the second liquid inlet, so that only a portion of the cooling liquid discharged from the first liquid outlet enters the second liquid inlet. This achieves the effect of different flow rates of the cooling liquid in the first cooling structure and the second cooling structure, thereby meeting the different flow rate requirements of the first cooling structure and the second cooling structure.

The energy storage system disclosed in the embodiments of this application can be used, but is not limited to, in fixed or mobile energy stations, such as energy storage containers, energy storage distribution cabinets, energy storage power stations, and battery swap stations. In some embodiments, the energy storage system may also include other functional compartments, such as a control compartment and a fire protection compartment. The control compartment is configured to manage the battery to achieve the storage and output of electrical energy.

The energy storage system provided by the embodiments of this application is described below.

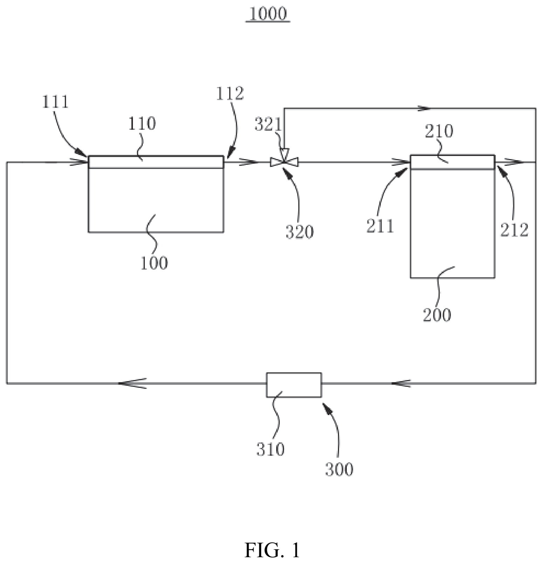

Referring to FIG. 1, an embodiment of this application provides an energy storage system 1000, including a battery module 100, a converter 200, and a cooling device 300. The battery module 100 includes a first cooling structure 110, and the first cooling structure 110 has a first liquid inlet 111 and a first liquid outlet 112. The converter 200 includes a second cooling structure 210, and the second cooling structure 210 has a second liquid inlet 211 and a second liquid outlet 212.

The battery module 100 included in the energy storage system 1000 disclosed in the embodiments of this application is formed by series and/or parallel connection of battery cells. In one embodiment, a battery cell includes an end cap, a housing, and a cell assembly. The end cap and the housing together form an accommodating cavity, and the cell assembly is disposed in the accommodating cavity. The cell assembly is a component of the battery cell where electrochemical reactions occur. The cell assembly is mainly formed by winding or stacking a positive electrode plate and a negative electrode plate, with a separator typically disposed between the positive electrode plate and the negative electrode plate. During the charging and discharging process of the battery, the active material on the positive electrode plate and the active material on the negative electrode plate react with the electrolyte to generate current.

The battery module 100 is a module formed by series and/or parallel connection of battery cells. In the embodiments of this application, it can be understood that the battery module 100 is configured with a first cooling structure 110 for circulating a cooling liquid. The first cooling structure 110 may be disposed on the battery module 100 formed by series and/or parallel connection of several battery cells, or on a single battery cell, or on a box/cabinet accommodating all battery cells/battery modules 100. When the cooling liquid flows through the first cooling structure 110, the first cooling structure 110 cools the battery module 100, removing the heat generated by the battery module 100 during operation. The first cooling structure 110 may be, but is not limited to, a tubular structure, a plate structure, or the like. The first cooling structure 110 has a first liquid inlet 111 and a first liquid outlet 112. The cooling liquid can flow into the first cooling structure 110 from the first liquid inlet 111 and flow out of the first cooling structure 110 from the first liquid outlet 112.

The converter 200 is an electrical device that changes the voltage, frequency, phase number, or other electrical quantities or characteristics of a power system. It can be understood that the converter 200 is configured with a second cooling structure 210 for circulating the cooling liquid. When the cooling liquid flows through the second cooling structure 210, the second cooling structure 210 cools the converter 200, removing the heat generated by the converter 200 during operation. The second cooling structure 210 may be, but is not limited to, a tubular structure, a plate structure, or the like. The second cooling structure 210 has a second liquid inlet 211 and a second liquid outlet 212. The cooling liquid can flow into the second cooling structure 210 from the second liquid inlet 211 and flow out of the second cooling structure 210 from the second liquid outlet 212.

The cooling device 300 includes a cooling unit 310 and a bypass structure 320. A liquid outlet end of the cooling unit 310 is connected to the first liquid inlet 111 through a pipeline, and a liquid inlet end of the cooling unit 310 is connected to the second liquid outlet 212 through a pipeline. The bypass structure 320 is configured to communicate the first liquid outlet 112 with the second liquid inlet 211, and the bypass structure 320 is further configured to bypass a portion of the cooling liquid discharged from the first liquid outlet 112 to outside the second liquid inlet 211.

The cooling unit 310 is configured to provide the cooling liquid and to re-cool the cooling liquid that flows back. The liquid outlet end of the cooling unit 310 refers to the output port of the cooling unit 310 for outputting the cooling liquid, and the liquid outlet end of the cooling unit 310 refers to the input port of the cooling unit 310 for receiving the returned cooling liquid.

The foregoing pipeline is a pipe structure used for the circulation of cooling liquid.

The liquid outlet end of the cooling unit 310 is connected to the first liquid inlet 111 through a pipeline, meaning that the cooling unit 310 can introduce the cooling liquid into the first liquid inlet 111, allowing the cooling liquid to flow into the first cooling structure 110 to dissipate heat from the battery module 100. The liquid inlet end of the cooling unit 310 is connected to the second liquid outlet 212 through a pipeline, meaning that the cooling liquid that sequentially flows through the first cooling structure 110 and the second cooling structure 210 and performs heat absorption and cooling operations, can flow out from the second liquid outlet 212 and return to the cooling unit 310. The cooling unit 310 cools the returned cooling liquid so that the cooling liquid can be discharged again from the liquid outlet end of the cooling unit 310 at a preset temperature.

The bypass structure 320 is configured to perform a bypass operation on the cooling liquid discharged from the first liquid outlet 112 of the first cooling structure 110, so that a portion of the cooling liquid discharged from the first liquid outlet 112 is introduced into the second liquid inlet 211 of the second cooling structure 210, while another portion is discharged out of the second liquid inlet 211, achieving the purpose of different flow rates of the cooling liquid passing through the first cooling structure 110 and of the cooling liquid passing through the second cooling structure 210. The foregoing bypass operation refers to diverting a branch flow from the fluid that flows from the first liquid outlet 112 to the second liquid inlet 211 to the outside.

Specifically, the bypass structure 320 may be a multi-way valve, such as a three-way valve, with two of the valve ports of the three-way valve respectively communicating with the first liquid outlet 112 and the second liquid inlet 211, and the other valve port of the three-way valve communicating to the outside, so that only a portion of the cooling liquid discharged from the first liquid outlet 112 flows into the second liquid inlet 211. Alternatively, the bypass structure 320 may be a shunt pipe, where the shunt pipe is connected to the pipe between the first liquid outlet 112 and the second liquid inlet 211, allowing a portion of the cooling liquid to flow out through the shunt pipe during the process of the cooling liquid flowing from the first liquid outlet 112 to the second liquid inlet 211, so that the cooling liquid flowing into the second liquid inlet 211 constitutes only a portion of the cooling liquid flowing from the first liquid outlet 112.

The number of bypass structures 320 may be one or more. When there are multiple bypass structures 320, the multiple bypass structures 320 may be sequentially connected in series between the first liquid outlet 112 and the second liquid inlet 211.

In the energy storage system 1000 provided by the embodiments of this application, the cooling unit 310 can introduce the cooling liquid that sequentially flows through the first cooling structure 110 and the second cooling structure 210 to respectively dissipate heat from the battery module 100 and the converter 200. After the cooling liquid is discharged from the first liquid outlet 112 of the first cooling structure 110, a portion of the cooling liquid can be bypassed by the bypass structure 320 to outside the second liquid inlet 211. Therefore, only a portion of the cooling liquid discharged from the first cooling structure 110 can enter the second cooling structure 210 through the second liquid inlet 211, meaning that the flow rate of the cooling liquid passing through the second cooling structure 210 is less than the flow rate of the cooling liquid passing through the first cooling structure 110. The flow rate restrictions of the first cooling structure 110 and the second cooling structure 210 can be met, allowing only a single cooling device 300 to supply the cooling liquid to the first cooling structure 110 of the battery module 100 and the second cooling structure 210 of the converter 200 to achieve the cooling purpose. Thus, there is no need to use two cooling devices 300 to individually supply the cooling liquid to the first cooling structure 110 of the battery module 100 and the second cooling structure 210 of the converter 200, effectively reducing the cost of the energy storage system 1000.

Referring to FIG. 1, in some embodiments, the bypass structure 320 has a bypass end 321, and the bypass end 321 is connected to the liquid inlet end of the cooling unit 310.

It can be understood that the bypass structure 320 can perform a bypass operation on the cooling liquid discharged from the first liquid outlet 112 of the first cooling structure 110, so that a portion of the cooling liquid discharged from the first liquid outlet 112 is introduced into the second liquid inlet 211 of the second cooling structure 210, while another portion is discharged out of the second liquid inlet 211.

The bypass end 321 refers to an output port on the bypass structure 320 for discharging the cooling liquid discharged from the first liquid outlet 112 to outside the second liquid inlet 211. For example, when the bypass structure 320 is a three-way valve, the bypass end is one of the valve ports of the three-way valve. The valve port communicates to outside the first liquid outlet 112 and the second liquid inlet 211, allowing the cooling liquid discharged from the first liquid outlet 112 to be discharged out of the second liquid inlet 211.

Specifically, the bypass structure 320 directly introduces the portion of the cooling liquid discharged out of the second liquid inlet 211 into the liquid inlet end of the cooling unit 310, so that the cooling liquid can fully return to the cooling unit 310 for cyclic use.

For example, in some specific embodiments, the bypass structure 320 may be a three-way valve, with two of the valve ports of the three-way valve respectively communicating with the first liquid outlet 112 and the second liquid outlet 212, and the other valve port of the three-way valve communicating with the liquid inlet end of the cooling unit 310. The cooling liquid is discharged from the liquid outlet end of the cooling unit 310 and then introduced into the first liquid inlet 111. The cooling liquid can flow through the first cooling structure 110 and cool the battery module 100. The cooling liquid flowing through the first cooling structure 110 can be discharged from the first liquid outlet 112, with a portion of the cooling liquid introduced into the second liquid inlet 211 through the three-way valve, and another portion of the cooling liquid introduced into the liquid outlet end of the cooling unit 310 through the three-way valve. The cooling liquid introduced into the second liquid inlet 211 can flow through the second cooling structure 210 and cool the converter 200. The flow rate of the cooling liquid flowing through the second cooling structure 210 is less than the flow rate of the cooling liquid flowing through the first cooling structure 110, thereby achieving the purpose of using only a single cooling unit 310 to sequentially communicate with the first cooling structure 110 and the second cooling structure 210 and meet the different cooling liquid flow rate requirements of the first cooling structure 110 and the second cooling structure 210.

The foregoing cooling unit 310 is an apparatus used to cool the cooling liquid, and the cooling unit 310 may be a cooling tower. A cooling tower is an evaporative heat dissipation device that uses the cooling liquid to exchange heat with air through contact, generating steam that evaporates and removes heat, achieving evaporative heat dissipation, convective heat transfer, and radiative heat transfer to reduce the temperature of the cooling liquid, ensuring normal operation of the cooling process. Specifically, the cooling liquid may be, but is not limited to, cooling water, cooling oil, or the like.

It can be understood that a water pump may also be provided between the liquid outlet end of the cooling unit 310 and the first liquid inlet 111, so as to use the water pump to pump the cooling liquid into the first cooling structure 110.

With this arrangement, the bypass end 321 of the bypass structure 320 can bypass a portion of the cooling liquid discharged from the first liquid outlet 112 of the first cooling structure 110 to the liquid inlet end of the cooling unit 310, so that this portion of the cooling liquid directly flows from the first cooling structure 110 back to the cooling unit 310 for cooling and circulation.

Referring to FIG. 1, in some embodiments, the bypass structure 320 is a three-way valve, and the three-way valve includes a first valve port, a second valve port, and a third valve port. The first valve port is connected to the first liquid outlet 112, the second valve port is connected to the second liquid inlet 211, and the third valve port is the bypass end, the third valve port is connected to the liquid inlet end of the cooling unit 310.

A three-way valve refers to a valve apparatus with three valve ports, and among the three valve ports, one is an inlet and two are outlets. Specifically, in this embodiment, the first valve port is an inlet for the inflow of the cooling liquid, and the second valve port and the third valve port are both outlets for the outflow of the cooling liquid, with the third valve port serving as the bypass end 321 for bypassing a portion of the cooling liquid to the cooling unit 310.

Specifically, during the cooling process, the cooling liquid is discharged from the cooling unit 310 and flows through the first cooling structure 110. Then, the cooling liquid is discharged from the first liquid outlet 112 into the first valve port of the three-way valve. The cooling liquid entering the three-way valve is divided into two streams to flow out of the three-way valve through the second valve port and the third valve port. The stream of the cooling liquid flowing out from the second valve port can be introduced into the second liquid inlet 211 and flow through the second cooling structure 210, then flow out from the second liquid outlet 212, and return to the cooling unit 310. The other stream of the cooling liquid flowing out from the third valve port can directly return to the cooling unit 310, achieving the purpose of the flow rate of the cooling liquid flowing through the first cooling structure 110 being different from the flow rate of the cooling liquid flowing through the second cooling structure 210.

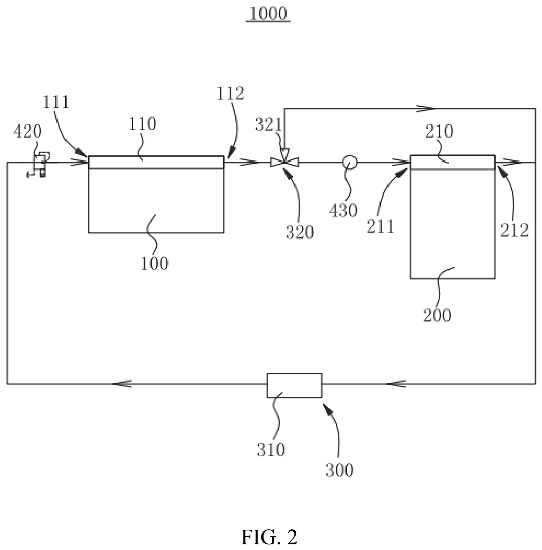

Referring to FIG. 2 to FIG. 5, in some embodiments, the cooling device 300 further includes a hydraulic adjustment mechanism, and the hydraulic adjustment mechanism is configured to adjust the hydraulic pressure difference between the cooling liquid in the first cooling structure 110 and the cooling liquid in the second cooling structure 210.

It can be understood that the hydraulic adjustment mechanism can adjust the hydraulic pressure difference between the cooling liquid in the first cooling structure 110 and the cooling liquid in the second cooling structure 210 to meet the hydraulic pressure difference requirements between the cooling liquid in the first cooling structure 110 and the cooling liquid in the second cooling structure 210 under different conditions.

Specifically, the hydraulic adjustment mechanism may include a pressure boosting device for increasing the hydraulic pressure of the cooling liquid, such as a pressure boosting valve or a pressure boosting pump. The hydraulic adjustment mechanism may also include a pressure reduction device for reducing the hydraulic pressure of the cooling liquid, such as a pressure reduction pipeline or a pressure reduction valve. The pressure reduction pipeline may be a pipeline structure with a gradually increasing cross-sectional area of the pipeline. When the cooling liquid flows, a larger cross-sectional area of the pipeline means a lower hydraulic pressure of the cooling liquid. Alternatively, the hydraulic adjustment mechanism may include a spacer block, and the spacer block is used to elevate the first cooling structure 110 and the second cooling structure 210 to different heights, with the cooling liquid flowing through the higher one of the first cooling structure 110 or the second cooling structure 210 having a lower hydraulic pressure.

The hydraulic adjustment mechanism may be disposed between the liquid outlet end of the cooling unit 310 and the first liquid inlet 111, where the hydraulic adjustment mechanism can adjust the hydraulic pressure of the cooling liquid in the first cooling structure 110. Alternatively, the hydraulic adjustment mechanism may be disposed between the first liquid outlet 112 and the second liquid inlet 211, where the hydraulic adjustment mechanism can adjust the hydraulic pressure of the cooling liquid in the second cooling structure 210. Alternatively, the hydraulic adjustment mechanism may be disposed both between the liquid outlet end of the cooling unit 310 and the first liquid inlet 111 and between the first liquid outlet 112 and the second liquid inlet 211, where the hydraulic adjustment mechanism can adjust both the hydraulic pressure of the cooling liquid in the first cooling structure 110 and the cooling liquid in the second cooling structure 210.

With this arrangement, the hydraulic adjustment mechanism is used to adjust the hydraulic pressure difference between the cooling liquid in the first cooling structure 110 and the cooling liquid in the second cooling structure 210 to meet the different hydraulic pressure requirements of the battery module 100 and the converter 200 for the cooling liquid.

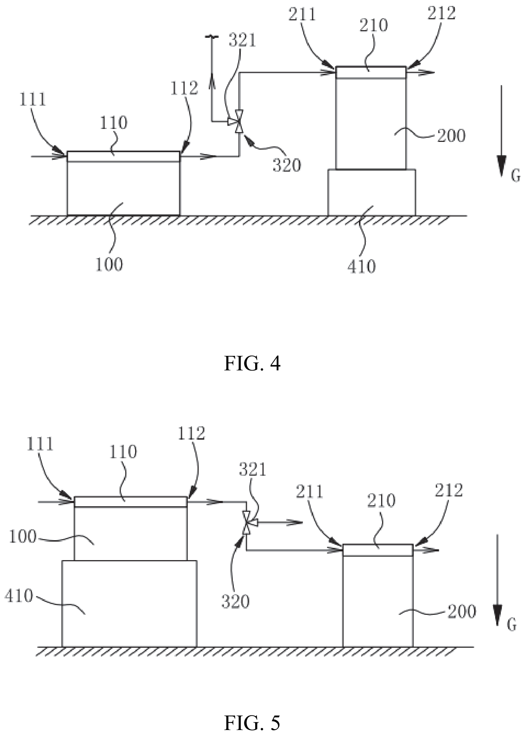

Referring to FIG. 1 and FIG. 5, in some embodiments, the hydraulic adjustment mechanism includes a spacer block 410. In the direction of gravity G, when the spacer block 410 is configured to be disposed at a bottom of the first cooling structure 110, a height of the first cooling structure 110 is greater than a height of the second cooling structure 210.

It can be understood that the spacer block 410 may be disposed at the bottom of the first cooling structure 110 in the direction of gravity G, so that the first cooling structure 110 is elevated in the direction of gravity G, making the first cooling structure 110 higher than the second cooling structure 210 in the direction of gravity G. That is, there is a height difference between the first cooling structure 110 and the second cooling structure 210. It should be understood that the cooling liquid needs to overcome gravity when flowing to a higher position, so a higher height means a lower the hydraulic pressure of the cooling liquid. The hydraulic pressure of the cooling liquid flowing through the first cooling structure 110 and the hydraulic pressure of the cooling liquid flowing through the second cooling structure 210 form a hydraulic pressure difference, with the hydraulic pressure of the cooling liquid flowing through the first cooling structure 110 being lower than the hydraulic pressure of the cooling liquid flowing through the second cooling structure 210.

Specifically, the spacer block 410 may be disposed below the battery module 100 to elevate the entire battery module 100, thereby elevating the first cooling structure 110.

Referring to FIG. 1 and FIG. 4, in some embodiments, the hydraulic adjustment mechanism includes a spacer block 410. In the direction of gravity, when the spacer block 410 is configured to be disposed at the bottom of the second cooling structure 210, the height of the second cooling structure 210 is greater than the height of the first cooling structure 110.

It can be understood that the spacer block 410 may be disposed at the bottom of the second cooling structure 210 in the direction of gravity G, so that the second cooling structure 210 is elevated in the direction of gravity G, making the second cooling structure 210 higher than the first cooling structure 110 in the direction of gravity G. That is, there is a height difference between the first cooling structure 110 and the second cooling structure 210. Thus, the hydraulic pressure of the cooling liquid flowing through the first cooling structure 110 and the hydraulic pressure of the cooling liquid flowing through the second cooling structure 210 form a hydraulic pressure difference, with the hydraulic pressure of the cooling liquid flowing through the second cooling structure 210 being lower than the hydraulic pressure of the cooling liquid flowing through the first cooling structure 110.

Specifically, the spacer block 410 may be disposed below the converter 200 to elevate the entire converter 200, thereby elevating the second cooling structure 210; or the spacer block 410 may be disposed inside the converter 200 and placed below the second cooling structure 210. The spacer block 410 can elevate the second cooling structure 210.

With this arrangement, the spacer block 410 is used to elevate the first cooling structure 110 or the second cooling structure 210, creating a height difference between the first cooling structure 110 and the second cooling structure 210 in the direction of gravity G. It can be understood that, in the direction of gravity G, a higher height means a lower hydraulic pressure of the cooling liquid. Therefore, by adjusting the height difference between the first cooling structure 110 and the second cooling structure 210 in the direction of gravity G, the purpose of adjusting the hydraulic pressure difference between the cooling liquid in the first cooling structure 110 and the cooling liquid in the second cooling structure 210 can be achieved to meet the different hydraulic pressure requirements of the battery module 100 and the converter 200 for the cooling liquid.

Referring to FIG. 4 and FIG. 5, in some embodiments, the spacer block 410 is insulative.

It can be understood that the spacer block 410 may be, but is not limited to, an inorganic insulating spacer block (for example, ceramic spacer block, mica spacer block, or glass spacer block), an organic insulating spacer block (for example, rubber spacer block or resin spacer block), or a composite insulating spacer block (a spacer block formed by combining two or more insulating materials).

The number of spacer blocks 410 may be one or more. Only a single spacer block 410 may be used to elevate the first cooling structure 110 or the second cooling structure 210, or multiple spacer blocks 410 may be used to elevate the first cooling structure 110 or the second cooling structure 210.

With this arrangement, since the spacer block 410 is insulative, when the spacer block 410 is placed on the ground, the insulation level of the battery module 100 or the converter 200 relative to the ground can be improved.

For example, in some specific embodiments, the hydraulic adjustment mechanism includes a spacer block 410, and the spacer block 410 is insulative. The spacer block 410 is placed at the bottom of the converter 200 to elevate the entire converter 200, so that, in the direction of gravity G, the height of the second cooling structure 210 is greater than the height of the first cooling structure 110. The bypass structure 320 is a three-way valve, with the first valve port of the three-way valve communicating with the first liquid outlet 112, the second valve port of the three-way valve communicating with the second liquid inlet 211, and the third valve port of the three-way valve communicating with the liquid inlet end of the cooling unit 310. During the cooling process, the cooling unit 310 discharges the cooling liquid from the liquid outlet end, and the cooling liquid is introduced into the first cooling structure 110 through the first liquid inlet 111. After flowing through the first cooling structure 110, the cooling liquid flows out from the first liquid outlet 112 to the three-way valve. At this time, a portion of the cooling liquid directly flows back to the liquid inlet end of the cooling unit 310 and enters the cooling unit 310, while another portion of the cooling liquid overcomes gravity and flows to the higher second cooling structure 210. Thus, the flow rate and hydraulic pressure of the cooling liquid introduced into the second cooling structure 210 through the second liquid inlet 211 are lower than the flow rate and hydraulic pressure of the cooling liquid flowing through the first cooling structure 110. Therefore, the different flow and hydraulic pressure requirements of the first cooling structure 110 and the second cooling structure 210 can be met, achieving the purpose of meeting the cooling requirements of both the battery module 100 and the converter 200 by using only a single cooling unit 310 without modifying the original structures of the battery module 100 and the converter 200, thereby effectively reducing the cost of the energy storage system 1000.

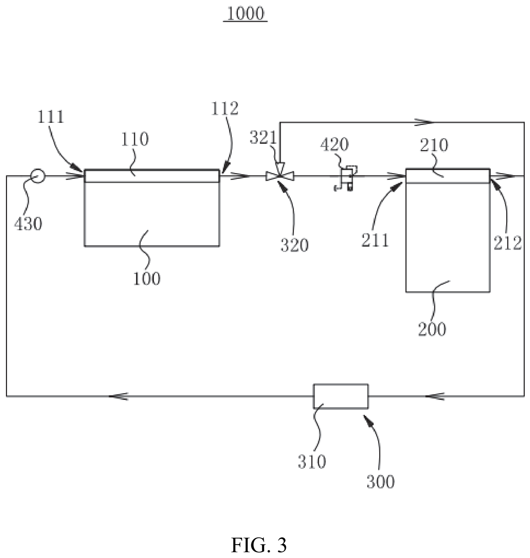

Referring to FIG. 3, in some embodiments, the hydraulic adjustment mechanism includes a pressure reduction structure 420, and the pressure reduction structure 420 is disposed between the second liquid inlet 211 and the first liquid outlet 112.

It can be understood that the pressure reduction structure 420 is configured to depressurize the cooling liquid. Specifically, the pressure reduction structure 420 may be, but is not limited to, a pressure reduction valve, a pressure reduction pipeline, or the like. The number of pressure reduction structures 420 may be one or more, and when there are multiple pressure reduction structures 420, the multiple pressure reduction structures 420 may be sequentially disposed between the second liquid inlet 211 and the first liquid outlet 112.

For example, in some specific embodiments, the pressure reduction structure 420 is a pressure reduction valve, with one pressure reduction valve disposed. The pressure reduction valve is disposed on the pipeline between the second liquid inlet 211 and the first liquid outlet 112, as shown in FIG. 3. It can be understood that the pressure reduction valve reduces hydraulic pressure by the local resistance of the flow path within the valve with respect to the water flow, and the range of hydraulic pressure reduction is automatically adjusted by the water pressure difference between the inlet and outlet on two sides of the membrane or piston connected to the valve disc. The cooling liquid flows through the first cooling structure 110 and is discharged from the first liquid outlet 112 to the pressure reduction valve, and the pressure reduction valve can adjust the pressure of the cooling liquid. The cooling liquid flows to the bypass structure 320; after being diverted by the bypass structure 320, flows to the pressure reduction valve; and after being depressurized by the pressure reduction valve, is introduced into the second liquid inlet 211. Thus, the cooling liquid can be diverted and depressurized before being introduced into the second cooling structure 210, with the hydraulic pressure of the cooling liquid flowing through the second cooling structure 210 being lower than the hydraulic pressure of the cooling liquid flowing through the first cooling structure 110, and the flow rate of the cooling liquid flowing through the second cooling structure 210 being lower than the flow rate of the cooling liquid flowing through the first cooling structure 110, to meet the different flow rate and hydraulic pressure requirements of the first cooling structure 110 and the second cooling structure 210.

Referring to FIG. 3, in some embodiments, the hydraulic adjustment mechanism includes a pressure boosting structure 430, and the pressure boosting structure 430 is disposed between the liquid outlet end of the cooling unit 310 and the first liquid inlet 111.

It can be understood that the pressure boosting structure 430 is configured to pressurize the cooling liquid. Specifically, the pressure boosting structure 430 may be, but is not limited to, a pressure boosting valve, a pressure boosting pump, or a pressure boosting pipeline. The pressure boosting pipeline may be a pipeline structure with a gradually decreasing cross-sectional area of the pipeline. When the cooling liquid flows, a smaller cross-sectional area of the pipeline means a higher hydraulic pressure of the cooling liquid.

The number of pressure boosting structures 430 may be one or more, and when there are multiple pressure boosting structures 430, the pressure boosting structures 430 may be sequentially disposed between the liquid outlet end of the cooling unit 310 and the first liquid inlet 111.

For example, in some specific embodiments, the hydraulic adjustment mechanism includes a pressure boosting structure 430 and a pressure reduction structure 420. The pressure boosting structure 430 may be a pressure boosting pump, and the pressure reduction structure 420 may be a pressure reduction valve, with one pressure boosting pump and one pressure reduction valve. The pressure boosting pump is disposed on the pipeline between the cooling unit 310 and the first liquid inlet 111, and the pressure reduction valve is disposed on the pipeline between the first liquid outlet 112 and the second liquid inlet 211, as shown in FIG. 3. It can be understood that the pressure boosting pump drives its impeller to rapidly rotate to drive the cooling liquid to rotate, causing the cooling liquid to gain energy and flow out of the impeller to achieve the purpose of pressurization. The cooling unit 310 discharges cooling liquid from the liquid outlet end, and after being pressurized by the pressure boosting pump, the cooling liquid is introduced into the first cooling structure 110 through the first liquid inlet 111. After flowing through the first cooling structure 110, the cooling liquid is discharged from the first liquid outlet 112, and the discharged cooling liquid is diverted by the bypass structure 320. The cooling liquid with a reduced flow rate is then depressurized by the pressure reduction valve and introduced into the second cooling structure 210 through the second liquid inlet 211. Therefore, the hydraulic pressure of the cooling liquid flowing through the second cooling structure 210 is lower than the hydraulic pressure of the cooling liquid flowing through the first cooling structure 110, and the flow rate of the cooling liquid flowing through the second cooling structure 210 is lower than the flow rate of the cooling liquid flowing through the first cooling structure 110, to meet the different flow rate and hydraulic pressure requirements of the first cooling structure 110 and the second cooling structure 210.

Referring to FIG. 2, in some embodiments, the hydraulic adjustment mechanism includes a pressure boosting structure 430, and the pressure boosting structure 430 is disposed between the second liquid inlet 211 and the first liquid outlet 112.

For example, in some specific embodiments, the pressure boosting structure 430 may be a pressure boosting pump, with one pressure boosting pump disposed. The pressure boosting pump is disposed on the pipeline between the second liquid inlet 211 and the first liquid outlet 112, as shown in FIG. 2. The cooling liquid flows through the first cooling structure 110, is introduced from the first liquid outlet 112 to the bypass structure 320, and after being diverted by the bypass structure 320, is introduced into the pressure boosting pump. The pressure boosting pump can adjust the pressure of the cooling liquid. The cooling liquid is pressurized by the pressure boosting pump and then flows to the second liquid inlet 211. Thus, the cooling liquid can be diverted by the bypass structure 320 and pressurized by the pressure boosting pump before being introduced into the second cooling structure 210, with the hydraulic pressure of the cooling liquid flowing through the second cooling structure 210 being higher than the hydraulic pressure of the cooling liquid flowing through the first cooling structure 110, and the flow rate of the cooling liquid flowing through the second cooling structure 210 being lower than the flow rate of the cooling liquid flowing through the first cooling structure 110, to meet the different flow rate and hydraulic pressure requirements of the first cooling structure 110 and the second cooling structure 210.

Referring to FIG. 2, in some embodiments, the hydraulic adjustment mechanism includes a pressure reduction structure 420, and the pressure reduction structure 420 is disposed between the liquid outlet end of the cooling unit 310 and the first liquid inlet 111.

For example, in some specific embodiments, the hydraulic adjustment mechanism includes a pressure boosting structure 430 and a pressure reduction structure 420. The pressure boosting structure 430 may be a pressure boosting pump, and the pressure reduction structure 420 may be a pressure reduction valve, with one pressure boosting pump and one pressure reduction valve. The pressure boosting pump is disposed on the pipeline between the first liquid outlet 112 and the second liquid inlet 211, and the pressure reduction valve is disposed on the pipeline between the cooling unit 310 and the first liquid inlet 111, as shown in FIG. 3. The cooling unit 310 discharges the cooling liquid from the liquid outlet end, and after being depressurized by the pressure reduction valve, the cooling liquid is introduced into the first cooling structure 110 through the first liquid inlet 111. After flowing through the first cooling structure 110, the cooling liquid is discharged from the first liquid outlet 112. The cooling liquid discharged flows to the bypass structure 320, and after being diverted by the bypass structure 320, is introduced into the pressure boosting pump. The pressure boosting pump can adjust the pressure of the cooling liquid. The cooling liquid is pressurized by the pressure boosting pump and then flows to the second liquid inlet 211. Therefore, the hydraulic pressure of the cooling liquid flowing through the second cooling structure 210 is higher than the hydraulic pressure of the cooling liquid flowing through the first cooling structure 110, and the flow rate of the cooling liquid flowing through the second cooling structure 210 is lower than the flow rate of the cooling liquid flowing through the first cooling structure 110, to meet the different flow rate and hydraulic pressure requirements of the first cooling structure 110 and the second cooling structure 210.

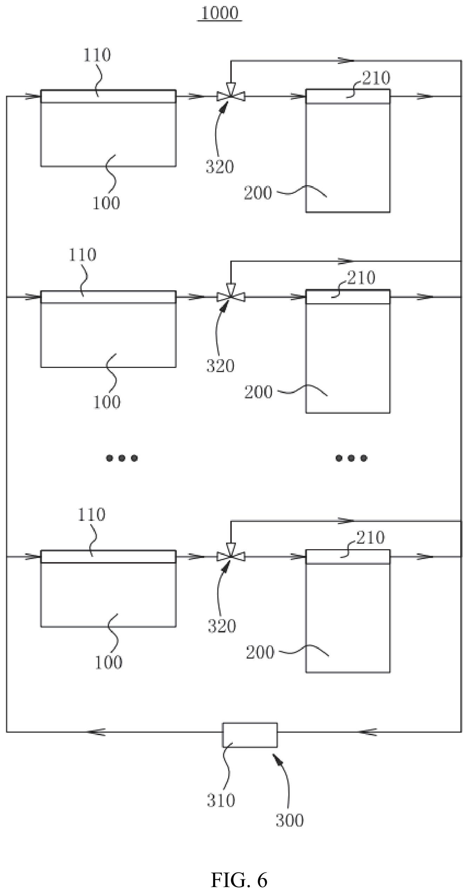

It should also be understood that a group of battery modules 100 and a corresponding group of converters 200 may constitute an energy storage subsystem, and an energy storage unit may include one or more energy storage subsystems, as shown in FIG. 6. It can be understood that each energy storage subsystem may communicate with the cooling unit 310 in parallel, meaning that the cooling unit 310 can provide the cooling liquid to multiple energy storage subsystems through the liquid outlet end, and the cooling liquid, after being diverted to the multiple energy storage subsystems, can all return to the liquid inlet end of the cooling unit 310.

In addition, each energy storage subsystem includes a bypass structure 320, and the bypass structure 320 is configured to bypass a branch flow of the cooling liquid flowing through the first cooling structure 110 of the battery module 100, so that the flow rate of the cooling liquid flowing through the second cooling structure 210 of the corresponding converter 200 is less than the flow rate of the cooling liquid flowing through the first cooling structure 110.

In a second aspect, an embodiment of this application further provides an energy storage power station, and the energy storage power station includes at least the energy storage system 1000 as described above.

The energy storage power station provided by the embodiments of this application includes the foregoing energy storage system 1000. Since the energy storage system 1000 can use only a single cooling device 300 to supply the cooling liquid to the first cooling structure 110 of the battery module 100 and the second cooling structure 210 of the converter 200 to achieve the cooling purpose, the cost of the energy storage system 1000 is effectively reduced, and thus the cost of the energy storage power station can also be reduced.

The above are merely preferred embodiments of this application and are not intended to limit this application. Any modifications, equivalent replacements, improvements, and the like made within the spirit and principles of this application shall be included within the protection scope of this application.

## Claims

1. An energy storage system, comprising:
a battery module, wherein the battery module comprises a first cooling structure, the first cooling structure having a first liquid inlet and a first liquid outlet;
a converter, wherein the converter comprises a second cooling structure, the second cooling structure having a second liquid inlet and a second liquid outlet; and
a cooling device, wherein the cooling device comprises a cooling unit and a bypass structure, wherein:
a liquid outlet end of the cooling unit is connected to the first liquid inlet through a pipeline, and a liquid inlet end of the cooling unit is connected to the second liquid outlet through a pipeline; and
the bypass structure is configured to communicate the first liquid outlet with the second liquid inlet and to bypass a portion of a cooling liquid discharged from the first liquid outlet to outside the second liquid inlet.

2. The energy storage system according to claim 1, wherein the bypass structure has a bypass end connected to the liquid inlet end of the cooling unit.

3. The energy storage system according to claim 2, wherein the bypass structure is a three-way valve comprising a first valve port, a second valve port, and a third valve port, wherein the first valve port is connected to the first liquid outlet, the second valve port is connected to the second liquid inlet, and the third valve port is the bypass end and is connected to the liquid inlet end of the cooling unit.

4. The energy storage system according to any one of claims 1 to 3, wherein the cooling device further comprises a hydraulic adjustment mechanism configured to be capable of adjusting a hydraulic pressure difference between the cooling liquid in the first cooling structure and the cooling liquid in the second cooling structure.

5. The energy storage system according to claim 4, wherein the hydraulic adjustment mechanism comprises a spacer block, wherein:
in a direction of gravity, when the spacer block is configured to be disposed at a bottom of the first cooling structure, a height of the first cooling structure is greater than a height of the second cooling structure; or
in the direction of gravity, when the spacer block is configured to be disposed at a bottom of the second cooling structure, a height of the second cooling structure is greater than a height of the first cooling structure.

6. The energy storage system according to claim 5, wherein the spacer block is insulative.

7. The energy storage system according to claim 4, wherein the hydraulic adjustment mechanism comprises a pressure reduction structure disposed between the second liquid inlet and the first liquid outlet.

8. The energy storage system according to claim 4 or 7, wherein the hydraulic adjustment mechanism comprises a pressure boosting structure disposed between the liquid outlet end of the cooling unit and the first liquid inlet.

9. The energy storage system according to claim 4, wherein the hydraulic adjustment mechanism comprises a pressure boosting structure disposed between the second liquid inlet and the first liquid outlet.

10. The energy storage system according to claim 4 or 9, wherein the hydraulic adjustment mechanism comprises a pressure reduction structure disposed between the liquid outlet end of the cooling unit and the first liquid inlet.

11. An energy storage power station, comprising at least the energy storage system according to any one of claims 1 to 10.
